# EUROPÄISCHE PATENTSCHRIFT

(11) **EP 3 752 405 B1**
(45) Veröffentlichungstag und Bekanntmachung des Hinweises auf die Patenterteilung: **09.08.2023**
(21) Anmeldenummer: 19716808.1
(22) Anmeldetag: 27.03.2019
(51) Int. Cl.: B61L 15/00, B61L 23/04

(54) **ANORDNUNG ZUR ÜBERWACHUNG VON AUSSENBEREICHEN EINES SCHIENENFAHRZEUGS**
ASSEMBLY FOR MONITORING EXTERIOR REGIONS OF A RAIL VEHICLE
SYSTÈME DE SURVEILLANCE DE ZONES EXTÉRIEURES D'UN VÉHICULE FERROVIAIRE

(30) Priorität: 11.04.2018 DE 102018205459
(43) Veröffentlichungstag der Anmeldung: 23.12.2020
(73) Patentinhaber: Siemens Mobility GmbH, 81739 München (DE)
(72) Erfinder: MEHLAN, Markus, 85757 Karlsfeld (DE)
(74) Vertreter: Siemens Patent Attorneys
(86) Internationale Anmeldenummer: PCT/EP2019/057697
(87) Internationale Veröffentlichungsnummer: WO 2019/197161

(56) Entgegenhaltungen:
- WO-A1-2011/023602
- DE-A1-102004 049 752
- DE-A1-102007 036 250
- DE-A1-102014 222 906

## Beschreibung

Die Erfindung betrifft eine Anordnung zur Überwachung von Au-ßenbereichen eines Schienenfahrzeugs, die duarch den Triebfahrzeugführer, beispielsweise beim Rangieren des Schienenfahrzeugs, nicht einsehbar sind. Die Erfindung adressiert dabei insbesondere Triebfahrzeuge bzw. Lokomotiven als Schienenfahrzeuge.

Schienenfahrzeuge und insbesondere deren Führerräume sind genormten Anforderungen unterworfen, die wenig freien Gestaltungsspielraum bei einem Neuentwurf lassen.

Wesentliche Einflussfaktoren bzw. Anforderungen bei der Gestaltung sind:
- das Sichtfeld des Triebfahrzeugführers nach außen, durch das die sichere Fahrt des Schienenfahrzeugs ermöglicht wird,
- anthropometrische Daten, mit deren Hilfe ergonomische Anforderungen des Arbeitsplatzes des Triebfahrzeugführers im Schienenfahrzeug erfüllt werden und mit deren Hilfe Arbeitsschutz- und Sicherheitsmaßnahmen im Schienenfahrzeug erfüllt werden,
- die Unterbringung von Bedien- und Anzeigeeinrichtungen im Greif- und Sichtbereich des Triebfahrzeugführers,
- Crash-Anforderungen, die beispielsweise über mechanisch ausgestaltete Maßnahmen erfüllt werden, um das Schienenfahrzeug sowie dessen Triebfahrzeugführer im Falle eines Unfalls zu schützen.

Diese Anforderungen werden durch mehr oder weniger voluminöse bzw. stabile, strukturelle Bauteile am Schienenfahrzeug erfüllt, die das Sichtfeld des Triebfahrzeugführers reduzieren sowie die Überwachung von Außenbereichen des Schienenfahrzeugs durch den Triebfahrzeugführer erschweren.

Gewisse Umgebungsbereiche bzw. Außenbereiche des Schienenfahrzeugs können daher durch den Triebfahrzeugführer wenig oder nicht eingesehen werden. Dies birgt insbesondere bei unübersichtlichen Situationen, wie beispielsweise bei Rangierfahrten, beim Befahren von ungesicherten Bahnübergängen, etc., ein großes Unfallrisiko.

Zur Vermeidung von Unfällen wird vom Triebfahrzeugführer umsichtiges Handeln erwartet. Der Triebfahrzeugführer kann beispielsweise Seitenfenster des Schienenfahrzeugs nutzen, um schlecht-einsehbare oder nicht-einsehbare Bereiche durch Hinauslehnen aus dem Seitenfenster zu überwachen.

Entsprechend kann der Triebfahrzeugführer nur jeweils eine Seite des Schienenfahrzeugs durch das Seitenfenster überwachen und ist darüber hinaus auch schlechten Wetterbedingungen ausgesetzt, so dass der Triebfahrzeugführer gesundheitlich belastet wird.

Aus Dokument DE 10 2014 222 906 A1 ist ein Schienenfahrzeug mit einem Sensor zur Erfassung eines Raumes außerhalb des Schienenfahrzeugs und/oder mit einem Signalgeber zum Ausgeben von Signalen in den Raum außerhalb des Schienenfahrzeugs bekannt. Das Schienenfahrzeug weist an seiner Außenoberfläche einen balkenförmigen Vorsprung auf, in dem zumindest ein Teil des Sensors und/oder ein Teil des Signalgebers angeordnet ist.

Es ist die Aufgabe der vorliegenden Erfindung, eine Anordnung zur verbesserten Überwachung von Außenbereichen eines Schienenfahrzeugs anzugeben.

Diese Aufgabe wird durch die Merkmale des Anspruchs 1 gelöst. Vorteilhafte Weiterbildungen sind in den abhängigen Ansprüchen angegeben.

Die Erfindung betrifft eine Anordnung zur Überwachung von Au-ßenbereichen eines Schienenfahrzeugs, die durch den Triebfahrzeugführer im Betrieb des Schienenfahrzeugs schlechteinsehbar bzw. nicht-einsehbar sind. Die Erfindung adressiert dabei insbesondere Triebfahrzeuge bzw. Lokomotiven als Schienenfahrzeuge.

Die Anordnung umfasst ein Schienenfahrzeug herkömmlicher Bauart, das (mit Bezug auf eine erste Fahrtrichtung des Schienenfahrzeugs) eine Frontseite, eine Heckseite und zwei Seitenbereiche aufweist.

Frontseite und Heckseite sind einander gegenüberliegend und im Wesentlichen quer zur Fahrtrichtung angeordnet bzw. ausgerichtet.

In einer bevorzugten Ausgestaltung sind Frontseite und Heckseite im Wesentlichen vertikal zum Gleiskörper des Schienenfahrzeugs angeordnet bzw. ausgerichtet.

Frontseite und Heckseite sind durch die beiden Seitenbereiche miteinander verbunden. Die beiden Seitenbereiche liegen einander gegenüber und sind dabei im Wesentlichen längs zur ersten Fahrtrichtung des Schienenfahrzeugs angeordnet bzw. ausgerichtet.

In einer bevorzugten Ausgestaltung sind die beiden Seitenbereiche im Wesentlichen vertikal zum Gleiskörper angeordnet bzw. ausgerichtet.

Im Bereich der Fronseite des Schienenfahrzeugs ist dabei ein Führerstand im Schienenfahrzeug angeordnet. Dieser Führerstand weist ein Führerstand-Sichtfeld auf, das in die erste Fahrtrichtung ausgerichtet ist und das vom Triebfahrzeugführer bei entsprechenden Vorwärtsfahrten überblickt und genutzt wird, um das Schienenfahrzeug in die erste Fahrtrichtung auf Sicht zu bewegen.

Erfindungsgemäß weist ein erster Seitenbereich ein erstes Kamerasystem auf, das derart ausgerichtet ist, dass es einen Winkelbereich mit einem Schenkel längs des ersten Seitenbereichs als erstes Seitensichtfeld optisch erfasst bzw. abdeckt.

Das erste Kamerasystem ist mit einer Anzeigevorrichtung im Führerstand verbunden, so dass eine in erster Fahrtrichtung durch das erste Kamerasystem erstellte Bildserie des ersten Seitensichtfelds an der Anzeigevorrichtung für den Triebfahrzeugführer dargestellt wird.

Dadurch wird dem Triebfahrzeugführer ermöglicht, das erste Seitensichtfeld über die Anzeigevorrichtung im Führerstand zu überblicken, zu kontrollieren und letztlich zusätzlich zum Führerstand-Sichtfeld zu überwachen.

Ein zweiter Seitenbereich weist ein zweites Kamerasystem auf, das dabei derart ausgerichtet ist, dass es einen Winkelbereich mit einem Schenkel längs des zweiten Seitenbereichs als zweites Seitensichtfeld optisch erfasst bzw. abdeckt.

Das zweite Kamerasystem ist mit einer Anzeigevorrichtung im Führerstand verbunden, so dass eine in erster Fahrtrichtung durch das zweite Kamerasystem erstellte Bildserie des zweiten Seitenbereichs an der Anzeigevorrichtung dargestellt wird.

Dadurch wird dem Triebfahrzeugführer ermöglicht, das zweite Seitensichtfeld über die Anzeigevorrichtung im Führerstand zu überblicken, zu kontrollieren und letztlich zusätzlich zum Führerstand-Sichtfeld zu überwachen.

In einer bevorzugten Weiterbildung überlappen sich das erste Seitensichtfeld und das Führerstand-Sichtfeld zumindest teilweise.

In einer bevorzugten Weiterbildung ist das erste Kamerasystem im Seitenendbereich und nahe der Heckseite angeordnet, um so einen vergrößerten Winkelbereich mit einem Schenkel längs des ersten Seitenbereichs optisch zu erfassen.

In einer bevorzugten Weiterbildung überlappen sich das zweite Seitensichtfeld und das Führerstand-Sichtfeld zumindest teilweise.

In einer bevorzugten Weiterbildung ist das zweite Kamerasystem im Seitenendbereich und nahe der Heckseite angeordnet, um so einen vergrößerten Winkelbereich mit einem Schenkel längs des zweiten Seitenbereichs optisch zu erfassen.

Dadurch wird dem Triebfahrzeugführer ermöglicht, einen erweiterten Sichtbereich, der das Führerstand-Sichtfeld, das erste und das zweite Seitensichtfeld umfasst, im Führerstand zu überblicken, zu kontrollieren und letztlich zu überwachen.

Die oben gemachten Ausführungen wurden mit Blick auf eine erste Fahrtrichtung, die vereinfacht als Vorwärtsfahrt bezeichnet wird, gemacht.

Entsprechend ist es dem Schienenfahrzeug möglich, Fahrten in einer der ersten Fahrtrichtung entgegen gesetzten zweiten Fahrtrichtung zu machen. Diese zweite Fahrtrichtung wird vereinfachend als Rückwärtsfahrt bezeichnet.

Für Fahrten in der zweiten Fahrtrichtung weist das Schienenfahrzeug in einer bevorzugten Weiterbildung im Bereich der oben beschriebenen Heckseite einen weiteren Führerstand auf. Dieser wird vom Triebfahrzeugführer bei entsprechenden Rückwärtsfahrten besetzt und genutzt.

Auch dieser weitere Führerstand weist ein weiteres Führerstands-Sichtfeld auf, das bei den Rückwärtsfahrten entsprechend der zweiten Fahrtrichtung ausgerichtet ist und das vom Triebfahrzeugführer überblickt und genutzt wird, um das Schienenfahrzeug auf Sicht zu bewegen.

Der erste Seitenbereich weist dann ein drittes Kamerasystem auf, das derart ausgerichtet ist, dass es einen Winkelbereich mit einem Schenkel längs des ersten Seitenbereichs als drittes Seitensichtfeld optisch erfasst bzw. abdeckt.

Das dritte Kamerasystem ist mit einer Anzeigevorrichtung im weiteren Führerstand verbunden, so dass bei den Rückwärtsfahrten eine in zweiter Fahrtrichtung durch das dritte Kamerasystem erstellte Bildserie an der Anzeigevorrichtung dargestellt wird.

In einer bevorzugten Weiterbildung ist das dritte Kamerasystem im Seitenendbereich und nahe der oben beschriebenen Frontseite angeordnet, um so einen vergrößerten Winkelbereich mit einem Schenkel längs des ersten Seitenbereichs optisch zu erfassen.

In einer bevorzugten Weiterbildung überlappen sich das dritte Seitensichtfeld und das weitere Führerstands-Sichtfeld zumindest teilweise.

Der zweite Seitenbereich weist ein viertes Kamerasystem auf, das dabei derart ausgerichtet ist, dass es einen Winkelbereich mit einem Schenkel längs des zweiten Seitenbereichs als viertes Seitensichtfeld optisch erfasst bzw. abdeckt.

Das vierte Kamerasystem ist mit einer Anzeigevorrichtung im weiteren Führerstand verbunden, so dass eine in zweiter Fahrtrichtung durch das vierte Kamerasystem erstelle Bildserie an der Anzeigevorrichtung dargestellt wird.

In einer bevorzugten Weiterbildung ist das vierte Kamerasystem im Seitenendbereich und nahe der oben beschriebenen Frontseite angeordnet, um so einen vergrößerten Winkelbereich mit einem Schenkel längs des zweiten Seitenbereichs optisch zu erfassen.

In einer bevorzugten Weiterbildung überlappen sich das vierte Seitensichtfeld und das weitere Führerstand-Sichtfeld zumindest teilweise.

Dadurch wird dem Triebfahrzeugführer ermöglicht, einen erweiterten Sichtbereich, der das weitere Führerstand-Sichtfeld, das dritte und das vierte Seitensichtfeld umfasst, im Führerstand zu überblicken, zu kontrollieren und letztlich zu überwachen.

Durch die erfindungsgemäße Anordnung wird in der jeweiligen ersten bzw. zweiten Fahrtrichtung des Schienenfahrzeugs das ursprünglich räumlich-begrenzte, jeweilige Führerstands-Sichtfeld durch zwei weitere Seitensichtfelder wesentlich erweitert.

Dadurch können weite Außenbereiche des Schienenfahrzeugs und damit weite Bereiche der Umgebung des Schienenfahrzeugs durch den Triebfahrzeugführer vereinfacht überwacht werden.

Durch die Übertragung von Bildserien von den Kamerasystemen zu Anzeigevorrichtungen, z.B. zu Bildschirmen, im jeweiligen Führerstand, kann der Triebfahrzeugführer die Außenbereiche des Schienenfahrzeugs überwachen, ohne dabei schlechten Wetterbedingungen ausgesetzt zu sein.

Durch eine Verwendung von Standardkomponenten bei den Kamerasystemen ist die erfindungsgemäße Anordnung bei geringen Kosten und auf einfache Weise in bestehende Schienenfahrzeuge integrierbar.

Durch die erfindungsgemäße Anordnung wird die Betriebssicherheit beträchtlich erhöht.

Nachfolgend wird die vorliegende Erfindung beispielhaft anhand einer Zeichnung beschrieben.

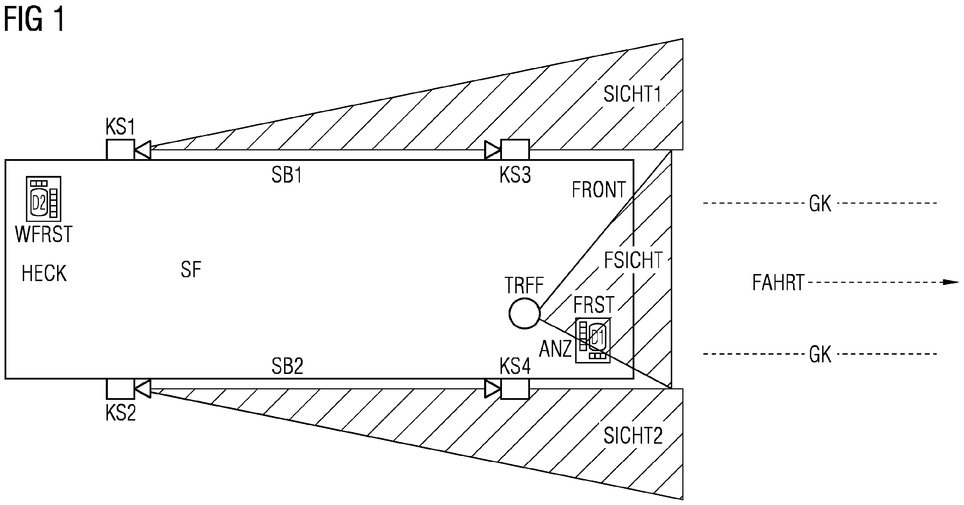

Dabei zeigt FIG 1 eine erfindungsgemäße Anordnung zur Überwachung von Außenbereichen eines Schienenfahrzeugs SF.

Das Schienenfahrzeug weist eine Frontseite FRONT, eine Heckseite HECK und zwei Seitenbereiche SB1, SB2 auf.

Frontseite FRONT und Heckseite HECK sind einander gegenüberliegend angeordnet. Beide sind quer zu einer ersten Fahrtrichtung FAHRT und im Wesentlichen vertikal zum Gleiskörper GK des Schienenfahrzeugs SF angeordnet bzw. ausgerichtet.

Frontseite FRONT und Heckseite HECK sind durch die beiden Seitenbereiche SB1, SB2 miteinander verbunden. Die beiden Seitenbereiche SB1, SB2 liegen einander gegenüber und sind dabei längs zur ersten Fahrtrichtung FAHRT des Schienenfahrzeugs SF und im Wesentlichen vertikal zum Gleiskörper GK angeordnet bzw. ausgerichtet.

Im Bereich der Fronseite FRONT des Schienenfahrzeugs SF ist dabei ein Führerstand FRST im Schienenfahrzeug SF angeordnet. Dieser Führerstand FRST weist ein Führerstands-Sichtfeld FSICHT auf, das in erster Fahrtrichtung FAHRT ausgerichtet ist und das vom Triebfahrzeugführer TRFF bei Vorwärtsfahrten überblickt und genutzt wird, um das Schienenfahrzeug SF in Fahrtrichtung FAHRT auf Sicht zu bewegen.

Ein erster Seitenbereich SB1 weist ein erstes Kamerasystem KS1 auf, das derart ausgerichtet ist, dass es einen Winkelbereich mit einem Schenkel längs des ersten Seitenbereichs SB1 als erstes Seitensichtfeld SICHT1 optisch erfasst bzw. abdeckt.

Das erste Kamerasystem KS1 ist mit einer Anzeigevorrichtung ANZ im Führerstand FRST verbunden, so dass eine in erster Fahrtrichtung durch das erste Kamerasystem KS1 erstelle Bildserie an der Anzeigevorrichtung ANZ dargestellt wird.

In einer bevorzugten Weiterbildung ist das erste Kamerasystem KS1 im Seitenendbereich und nahe der Heckseite HECK angeordnet, um so einen vergrößerten Winkelbereich mit einem Schenkel längs des ersten Seitenbereichs SB1 optisch zu erfassen.

In einer bevorzugten Weiterbildung überlappen sich das erste Seitensichtfeld SICHT1 und das Führerstand-Sichtfeld FSICHT zumindest teilweise.

Ein zweiter Seitenbereich SB2 weist ein zweites Kamerasystem KS2 auf, das dabei derart ausgerichtet ist, dass es einen Winkelbereich mit einem Schenkel längs des zweiten Seitenbereichs SB2 als zweites Seitensichtfeld SICHT2 optisch erfasst bzw. abdeckt.

Das zweite Kamerasystem KS2 ist mit der Anzeigevorrichtung ANZ im Führerstand FRST verbunden, so dass eine in erster Fahrtrichtung durch das zweite Kamerasystem KS2 erstellte Bildserie an der Anzeigevorrichtung ANZ dargestellt wird.

In einer bevorzugten Weiterbildung ist das zweite Kamerasystem KS2 im Seitenendbereich und nahe der Heckseite HECK angeordnet, um so einen vergrößerten Winkelbereich mit einem Schenkel längs des zweiten Seitenbereichs SB2 optisch zu erfassen.

In einer bevorzugten Weiterbildung überlappen sich das zweite Seitensichtfeld SICHT2 und das Führerstand-Sichtfeld FSICHT zumindest teilweise.

In einer bevorzugten Weiterbildung ist im Bereich der Heckseite HECK des Schienenfahrzeugs SF ein weiterer Führerstand WFRST im Schienenfahrzeug SF angeordnet.

Dieser wird vom Triebfahrzeugführer TRFF bei Fahrten in einer zur ersten Fahrtrichtung entgegengesetzten zweiten Fahrtrichtung (als Rückwärtsfahrt bezeichnet) besetzt und genutzt.

Entsprechend den oben gemachten Ausführungen weist dann der erste Seitenbereich SB1 ein drittes Kamerasystem KS3 auf, das mit einer Anzeigevorrichtung im weiteren Führerstand WFRST verbunden ist. Durch das dritte Kamerasystem erstellte Bildserien werden bei Rückwärtsfahrten an der Anzeigevorrichtung dargestellt.

Der zweite Seitenbereich SB2 weist ein viertes Kamerasystem KS4 auf, das mit der Anzeigevorrichtung im weiteren Führerstand WFRST verbunden ist. Durch das vierte Kamerasystem KS4 erstelle Bildserien werden bei Rückwärtsfahrten an der Anzeigevorrichtung dargestellt.

Die Kamerasysteme werden bei Rückwärtsfahrten entsprechend den oben gemachten Ausführungen dazu verwendet, einen erweiterten Sichtbereich für den Triebfahrzeugführer bei Rückwärtsfahrten über die Kamerasysteme KS3 und KS4 zur Verfügung zu stellen.

## Patentansprüche

1. Anordnung zur Überwachung von Außenbereichen eines Schienenfahrzeugs (SF) durch einen Triebfahrzeugführer (TRFF) des Schienenfahrzeugs (SF),
- bei der das Schienenfahrzeug (SF) eine Frontseite (FRONT), eine Heckseite (HECK) und zwei Seitenbereiche (SB1, SB2) aufweist,
- bei der Frontseite (FRONT) und Heckseite (HECK) einander gegenüberliegend angeordnet und im Wesentlichen quer zu einer ersten Fahrtrichtung (FAHRT) des Schienenfahrzeugs (SF) ausgerichtet sind,
- bei der Frontseite (FRONT) und Heckseite (HECK) durch die beiden Seitenbereiche (SB1, SB2) miteinander verbunden sind,
- bei der die beiden Seitenbereiche (SB1, SB2) einander gegenüberliegend angeordnet und im Wesentlichen längs zur ersten Fahrtrichtung (FAHRT) des Schienenfahrzeugs (SF) ausgerichtet sind,
- bei der im Bereich der Fronseite (FRONT) des Schienenfahrzeugs ein Führerstand (FRST) im Schienenfahrzeug (SF) angeordnet ist,
- bei der der Führerstand (FRST) in erster Fahrtrichtung (FAHRT) des Schienenfahrzeugs (SF) ein Führerstand-Sichtfeld (FSICHT) aufweist, das vom Triebfahrzeugführer (TRFF) bei Fahrten in der ersten Fahrtrichtung (FAHRT) überblickbar und nutzbar ist, um das Schienenfahrzeug (SF) auf Sicht zu bewegen,
**dadurch gekennzeichnet,**
- **dass** ein erster Seitenbereich (SB1) ein erstes in erster Fahrtrichtung (FAHRT) ausgerichtetes Kamerasystem (KS1) aufweist, das einen Winkelbereich mit einem Schenkel längs des ersten Seitenbereichs (SB1) als erstes Seitensichtfeld (SICHT1) optisch erfasst,
- **dass** ein zweiter Seitenbereich (SB2) ein zweites in erster Fahrtrichtung (FAHRT) ausgerichtetes Kamerasystem (KS2) aufweist, das einen Winkelbereich mit einem Schen kel längs des zweiten Seitenbereichs (SB2) als zweites Seitensichtfeld (SICHT2) optisch erfasst, und
- **dass** das erste Kamerasystem (KS1) und das zweite Kamerasystem (KS2) mit einer Anzeigevorrichtung (ANZ) im Führerstand (FRST) verbunden sind, so dass durch das erste und durch das zweite Kamerasystem (KS1, KS2) in erster Fahrtrichtung (FAHRT) erstellte Bildserien der Seitensichtfelder (SICHT1, SICHT2) an der Anzeigevorrichtung (ANZ) für den Triebfahrzeugführer (TRFF) dargestellt sind, die für den Triebfahrzeugführer (TRFF) zusätzlich nutzbar sind, um das Schienenfahrzeug (SF) auf Sicht zu bewegen.

2. Anordnung nach Anspruch 1, **dadurch gekennzeichnet,**
- **dass** sich das erste Seitensichtfeld (SICHT1) und das Führerstand-Sichtfeld (FSICHT) zumindest teilweise überlappt, und /oder
- **dass** sich das zweite Seitensichtfeld (FSICHT2) und das Führerstand-Sichtfeld (FSICHT) zumindest teilweise überlappt.

3. Anordnung nach Anspruch 1, **dadurch gekennzeichnet,**
- **dass** das erste Kamerasystem (KS1) im Seitenendbereich derart nahe an der Heckseite (HECK) angeordnet ist, dass ein vergrößerter Winkelbereich mit einem Schenkel längs des ersten Seitenbereichs (SB1) optisch erfasst ist, und/oder
- **dass** das zweite Kamerasystem (KS2) im Seitenendbereich derart nahe an der Heckseite (HECK) angeordnet ist, dass ein vergrößerter Winkelbereich mit einem Schenkel längs des zweiten Seitenbereichs (SB2) optisch erfasst ist.

4. Anordnung nach Anspruch 1, **dadurch gekennzeichnet,**
- **dass** im Bereich der Heckseite (HECK) des Schienenfahrzeugs (SF) ein weiterer Führerstand (WFRST) im Schienenfahrzeug (SF) angeordnet ist, der vom Triebfahrzeugführer (TRFF) bei Fahrten des Schienenfahrzeugs (FZ) in einer zweiten Fahrtrichtung, die zur ersten Fahrtrichtung (FAHRT) entgegengesetzt ist, besetzbar und nutzbar ist,
- **dass** der weitere Führerstand (WFRST) ein weiteres Führerstands-Sichtfeld aufweist, das in die zweite Fahrtrichtung ausgerichtet ist und das vom Triebfahrzeugführer überblickbar und nutzbar ist, um das Schienenfahrzeug (SF) bei Fahrten in zweiter Fahrtrichtung auf Sicht zu bewegen,
- **dass** der erste Seitenbereich (SB1) ein drittes, in zweiter Fahrtrichtung ausgerichtetes Kamerasystem (KS3) aufweist, das einen Winkelbereich mit einem Schenkel längs des ersten Seitenbereichs (SB1) als drittes Seitensichtfeld optisch erfasst,
- **dass** der zweite Seitenbereich (SB2) ein viertes, in zweiter Fahrtrichtung ausgerichtetes Kamerasystem (KS4) aufweist, das einen Winkelbereich mit einem Schenkel längs des zweiten Seitenbereichs (SB2) als viertes Seitensichtfeld optisch erfasst, und
- **dass** das dritte Kamerasystem (KS3) und das vierte Kamerasystem (KS4) mit einer Anzeigevorrichtung im weiteren Führerstand (WFRST) verbunden sind, so dass durch das dritte und durch das vierte Kamerasystem (KS3, KS4) bei Fahrten in zweiter Fahrtrichtung erstellte Bildserien an der Anzeigevorrichtung für den Triebfahrzeugführer dargestellt sind, die für den Triebfahrzeugführer zusätzlich nutzbar sind, um das Schienenfahrzeug (SF) auf Sicht zu bewegen.

5. Anordnung nach Anspruch 4, **dadurch gekennzeichnet,**
- **dass** sich das dritte Seitensichtfeld und das weitere Führerstand-Sichtfeld zumindest teilweise überlappt, und /oder
- **dass** sich das vierte Seitensichtfeld und das weitere Führerstand-Sichtfeld zumindest teilweise überlappt.

6. Anordnung nach Anspruch 4, **dadurch gekennzeichnet,**
- **dass** das dritte Kamerasystem (KS3) im Seitenendbereich derart nahe an der Frontseite (FRONT) angeordnet ist, dass ein vergrößerter Winkelbereich mit einem Schenkel längs des ersten Seitenbereichs (SB1) optisch erfasst ist, und/oder
- **dass** das vierte Kamerasystem (KS4) im Seitenendbereich derart nahe an der Frontseite (FRONT) angeordnet ist, dass ein vergrößerter Winkelbereich mit einem Schenkel längs des zweiten Seitenbereichs (SB2) optisch erfasst ist.

7. Anordnung nach Anspruch 1, bei dem das Schienenfahrzeug (SF) ein Triebfahrzeug oder eine Lokomotive ist.

## Claims

1. Arrangement for monitoring exterior regions of a rail vehicle (SF) by a traction-vehicle engineer (TRFF) of the rail vehicle (SF),
- in which the rail vehicle (SF) exhibits a front side (FRONT), a rear side (HECK) and two side regions (SB1, SB2),
- in which the front side (FRONT) and rear side (HECK) are arranged opposite one another and oriented substantially at right angles to a first direction of travel (FAHRT) of the rail vehicle (SF),
- in which the front side (FRONT) and rear side (HECK) are connected to one another by the two side regions (SB1, SB2),
- in which the two side regions (SB1, SB2) are arranged opposite one another and oriented substantially lengthwise relative to the first direction of travel (FAHRT) of the rail vehicle (SF),
- in which an engineer's cab (FRST) is arranged in the rail vehicle (SF) in the region of the front side (FRONT) of the rail vehicle,
- in which in the first direction of travel (FAHRT) of the rail vehicle (SF) the engineer's cab (FRST) has an engineer's cab field of vision (FSICHT) that can be surveyed and can be utilized by the traction-vehicle engineer (TRFF) in the course of trips in the first direction of travel (FAHRT), in order to move the rail vehicle (SF) by sight,
**characterized**
- **in that** a first side region (SB1) exhibits a first camera system (KS1) oriented in the first direction of travel (FAHRT), which optically captures an angular range with a branch along the first side region (SB1) as a first lateral field of vision (SICHT1),
- **in that** a second side region (SB2) exhibits a second camera system (KS2) oriented in the first direction of travel (FAHRT), which optically captures an angular range with a branch along the second side region (SB2) as a second lateral field of vision (SICHT2), and
- **in that** the first camera system (KS1) and the second camera system (KS2) are connected to a display device (ANZ) in the engineer's cab (FRST), so that series of images of the lateral fields of vision (SICHT1 SICHT2), created in the first direction of travel (FAHRT) by the first and by the second camera system (KS1, KS2), are represented on the display device (ANZ) for the traction-vehicle engineer (TRFF) and can be additionally utilized by the traction-vehicle engineer (TRFF) in order to move the rail vehicle (SF) by sight.

2. Arrangement according to Claim 1, **characterized**
- **in that** the first lateral field of vision (SICHT1) and the engineer's cab field of vision (FSICHT) overlap one another at least partially, and/or
- **in that** the second lateral field of vision (FSICHT2) and the engineer's cab field of vision (FSICHT) overlap one another at least partially.

3. Arrangement according to Claim 1, **characterized**
- **in that** the first camera system (KS1) is arranged in the side end region so close to the rear side (HECK) that an enlarged angular region with a branch along the first side region (SB1) is optically captured, and/or
- **in that** the second camera system (KS2) is arranged in the side end region so close to the rear side (HECK) that an enlarged angular region with a branch along the second side region (SB2) is optically captured.

4. Arrangement according to Claim 1, **characterized**
- **in that** a further engineer's cab (WFRST) is arranged in the rail vehicle (SF) in the region of the rear side (HECK) of the rail vehicle (SF) and can be occupied and utilized by the traction-vehicle engineer (TRFF) in the course of trips of the rail vehicle (FZ) in a second direction of travel, which is opposed to the first direction of travel (FAHRT),
- **in that** the further engineer's cab (WFRST) has a further engineer's cab field of vision that is oriented in the second direction of travel and can be surveyed and utilized by the traction-vehicle engineer, in order to move the rail vehicle (SF) by sight in the course of trips in the second direction of travel,
- **in that** the first side region (SB1) exhibits a third camera system (KS3), oriented in the second direction of travel, which optically captures an angular range with a branch along the first side region (SB1) as a third lateral field of vision,
- **in that** the second side region (SB2) exhibits a fourth camera system (KS4), oriented in the second direction of travel, which optically captures an angular range with a branch along the second side region (SB2) as a fourth lateral field of vision, and
- **in that** the third camera system (KS3) and the fourth camera system (KS4) are connected to a display device in the further engineer's cab (WFRST), so that series of images, created by the third and by the fourth camera system (KS3, KS4) in the course of trips in the second direction of travel, are represented on the display device for the traction-vehicle engineer and can be additionally utilized by the traction-vehicle engineer in order to move the rail vehicle (SF) by sight.

5. Arrangement according to Claim 4, **characterized**
- **in that** the third lateral field of vision and the further engineer's cab field of vision overlap one another at least partially, and/or
- **in that** the fourth lateral field of vision and the further engineer's cab field of vision overlap one another at least partially.

6. Arrangement according to Claim 4, **characterized**
- **in that** the third camera system (KS3) is arranged in the side end region so close to the front side (FRONT) that an enlarged angular region with a branch along the first side region (SB1) is optically captured, and/or
- **in that** the fourth camera system (KS4) is arranged in the side end region so close to the front side (FRONT) that an enlarged angular region with a branch along the second side region (SB2) is optically captured.

7. Arrangement according to Claim 1, in which the rail vehicle (SF) is a traction vehicle or a locomotive.

## Revendications

1. Agencement pour surveiller des zones extérieures d'un véhicule ferroviaire (SF) par un conducteur de motrice (TRFF) du véhicule ferroviaire (SF),
- dans lequel le véhicule ferroviaire (SF) présente un côté avant (FRONT), un côté arrière (HECK) et deux zones latérales (SB1, SB2),
- dans lequel le côté avant (FRONT) et le côté arrière (HECK) sont agencés l'un en face de l'autre et sont orientés sensiblement transversalement par rapport à un premier sens de marche (FAHRT) du véhicule ferroviaire (SF),
- dans lequel le côté avant (FRONT) et le côté arrière (HECK) sont reliés l'un à l'autre par les deux zones latérales (SB1, SB2),
- dans lequel les deux zones latérales (SB1, SB2) sont agencées l'une en face de l'autre et sont orientées sensiblement longitudinalement par rapport au premier sens de marche (FAHRT) du véhicule ferroviaire (SF),
- dans lequel un poste de conduite (FRST) est agencé dans le véhicule ferroviaire (SF) dans la zone du côté avant (FRONT) du véhicule ferroviaire,
- dans lequel le poste de conduite (FRST) présente un champ de vision de poste de conduite (FSICHT) dans le premier sens de marche (FAHRT) du véhicule ferroviaire (SF), qui peut être observé et utilisé par le conducteur de motrice (TRFF) lors de courses dans le premier sens de marche (FAHRT) afin de déplacer le véhicule ferroviaire (SF) à vue,
**caractérisé en ce que**
- une première zone latérale (SB1) présente un premier système de caméra (KS1) orienté dans le premier sens de marche (FAHRT), qui détecte optiquement une zone angulaire présentant une branche le long de la première zone latérale (SB1) en tant que premier champ de vision latéral (SICHT1),
- une seconde zone latérale (SB2) présente un deuxième système de caméra (KS2) orienté dans le premier sens de marche (FAHRT), qui détecte optiquement une zone angulaire présentant une branche le long de la seconde zone latérale (SB2) en tant que deuxième champ de vision latéral (SICHT2), et
- le premier système de caméra (KS1) et le deuxième système de caméra (KS2) sont reliés à un dispositif d'affichage (ANZ) dans le poste de conduite (FRST), de sorte que des séries d'images des champs de vision latéraux (SICHT1, SICHT2) produites via les premier et deuxième systèmes de caméra (KS1, KS2)dans le premier sens de marche (FAHRT) sont présentées sur le dispositif d'affichage (ANZ) pour le conducteur de motrice (TRFF), qui peuvent être utilisées de manière supplémentaire par le conducteur de motrice (TRFF) pour déplacer le véhicule ferroviaire (SF) à vue.

2. Agencement selon la revendication 1, **caractérisé en ce que**
- le premier champ de vision latéral (SICHT1) et le champ de vision de poste de conduite (FSICHT) se chevauchent au moins partiellement, et/ou
- le deuxième champ de vision latéral (FSICHT2) et le champ de vision de poste de conduite (FSICHT) se chevauchent au moins partiellement.

3. Agencement selon la revendication 1, **caractérisé en ce que**
- le premier système de caméra (KS1) est agencé dans la zone d'extrémité latérale si près du côté arrière (HECK) qu'une zone angulaire agrandie présentant une branche est détectée optiquement le long de la première zone latérale (SB1), et/ou
- le deuxième système de caméra (KS2) est agencé dans la zone d'extrémité latérale si près du côté arrière (HECK) qu'une zone angulaire agrandie présentant une branche est détectée optiquement le long de la seconde zone latérale (SB2).

4. Agencement selon la revendication 1, **caractérisé en ce que**
- dans la zone du côté arrière (HECK) du véhicule ferroviaire (SF), un poste de conduite supplémentaire (WFRST) est agencée dans le véhicule ferroviaire (SF), qui peut être occupé et utilisé par le conducteur de matrice(TRFF) lors de courses du véhicule ferroviaire (FZ) dans un second sens de marche opposé au premier sens de marche (FAHRT),
- le poste de conduite supplémentaire (WFRST) présente un champ de vision de poste de conduite supplémentaire, qui est orienté dans le second sens de marche, et que le conducteur de motrice peut voir et utiliser pour déplacer le véhicule ferroviaire (SF) à vue lors de courses dans le second sens de marche,
- la première zone latérale (SB1) présente un troisième système de caméra (KS3) orienté dans le second sens de marche, qui détecte optiquement une zone angulaire présentant une branche le long de la première zone latérale (SB1) en tant que troisième champ de vision latéral,
- la seconde zone latérale (SB2) présente un quatrième système de caméra (KS4) orienté dans le second sens de marche, qui détecte optiquement une zone angulaire présentant une branche le long de la seconde zone latérale (SB2) en tant que quatrième champ de vision latéral, et
- le troisième système de caméra (KS3) et le quatrième système de caméra (KS4) sont reliés à un dispositif d'affichage dans le poste de conduite supplémentaire (WFRST), de sorte que des séries d'images produites lors de courses dans le second sens de marche via les troisième et quatrième systèmes de caméra (KS3, KS4) sont présentées sur le dispositif d'affichage pour le conducteur de motrice, qui peuvent être utilisées de manière supplémentaire par le conducteur de motrice pour déplacer le véhicule ferroviaire (SF) à vue.

5. Agencement selon la revendication 4, **caractérisé en ce que**
- le troisième champ de vision latéral et le champ de vision de poste de conduite supplémentaire se chevauchent au moins partiellement, et/ou
- le quatrième champ de vision latéral et le champ de vision de poste de conduite supplémentaire se chevauchent au moins partiellement.

6. Agencement selon la revendication 4, **caractérisé en ce que**
- le troisième système de caméra (KS3) est agencé dans la zone d'extrémité latérale si près du côté avant (FRONT) qu'une zone angulaire agrandie présentant une branche est détectée optiquement le long de la première zone latérale (SB1), et/ou
- le quatrième système de caméra (KS4) est agencé dans la zone d'extrémité latérale si près du côté avant (FRONT) qu'une zone angulaire agrandie présentant une branche est détectée optiquement le long de la seconde zone latérale (SB2).

7. Agencement selon la revendication 1, dans lequel le véhicule ferroviaire (SF) est une motrice ou une locomotive.
